(19) Europäisches Patentamt
European Patent Office
Office européen des brevets

(11) **EP 3 609 850 B1**

(12) **FASCICULE DE BREVET EUROPEEN**

(45) Date de publication et mention de la délivrance du brevet:
**09.06.2021 Bulletin 2021/23**

(51) Int Cl.:
***C03C 17/22*** *(2006.01)* ***C03C 17/34*** *(2006.01)*

(21) Numéro de dépôt: **18719970.8**

(22) Date de dépôt: **12.04.2018**

(86) Numéro de dépôt international:
**PCT/FR2018/050920**

(87) Numéro de publication internationale:
**WO 2018/189488 (18.10.2018 Gazette 2018/42)**

(54) **VITRAGE REFLECHISSANT COMPRENANT UNE COUCHE MINCE DE NITRURE DE SILICIUM RICHE EN SILICIUM**

REFLEKTIERENDE VERGLASUNG MIT EINER DÜNNEN SCHICHT AUS SILICIUMREICHEN SILICIUMNITRID

REFLECTIVE GLAZING COMPRISING A THIN LAYER OF SILICON-RICH SILICON NITRIDE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **12.04.2017 FR 1753197**

(43) Date de publication de la demande:
**19.02.2020 Bulletin 2020/08**

(73) Titulaire: **SAINT-GOBAIN GLASS FRANCE**
**92400 Courbevoie (FR)**

(72) Inventeurs:
• WANAKULE, Nisita
75019 Paris (FR)
• AGUIAR, Rosiana
75015 Paris (FR)
• MARTIN, Estelle
93200 Saint-Denis (FR)

• LORENZZI, Jean Carlos
75011 Paris (FR)

(74) Mandataire: **Saint-Gobain Recherche**
**B.P. 135**
**39, quai Lucien Lefranc**
**93303 Aubervilliers Cedex (FR)**

(56) Documents cités:
EP-A1- 2 226 305     EP-A2- 1 238 950
WO-A1-2005/097697     WO-A1-2009/032032
WO-A1-2011/062574     WO-A2-02/090281
US-A- 5 897 372     US-A1- 2004 214 013
US-A1- 2005 202 254     US-A1- 2005 287 309
US-A1- 2006 292 381     US-A1- 2007 009 746
US-A1- 2011 262 726     US-A1- 2012 177 899
US-A1- 2014 071 524     US-A1- 2014 098 415
US-A1- 2015 140 354     US-A1- 2017 267 580

**Description**

L'invention se rapporte au domaine des articles verriers notamment utilisés comme vitrages, en particulier utilisable comme porte d'un four, comprenant à leur surface des revêtements réfléchissant le rayonnement solaire. Un tel article verrier peut également être utilisé dans le domaine du vitrage pour bâtiments ou pour automobile. Par vitrage, on entend au sens de la présente invention tout produit verrier constitué par un ou plusieurs substrats verriers, en particulier les simples vitrages, les doubles vitrages, les triples vitrages, les vitrages feuilletés etc.

De tels vitrages réfléchissants sont en principe munis d'une couche mince ou d'un empilement de couches minces qui agissent sur le rayonnement incident essentiellement par réflexion.

A l'heure actuelle, on connait différents types de revêtements. Ces revêtements sont de façon classique déposés par des techniques de dépôt du type CVD pour les plus simples. Par exemple, on connait depuis longtemps les propriétés de réflexion d'une couche d'oxycarbure de silicium déposée par voie pyrolytique à la surface d'un substrat verrier. En outre, la très forte réflexion dans le visible d'une telle couche permet de conférer au vitrage un aspect miroir d'une part et une couleur en transmission adaptée donnant au vitrage vu de l'extérieur de la cavité (côté couche) un aspect bronze ou doré.

Les méthodes CVD posent cependant différents problèmes parmi lesquels on peut notamment citer les suivants :

- Le dépôt de la couche active est effectué sur la ligne même de fabrication du substrat verrier, avec la difficulté posée par la flexibilité d'un tel procédé et la perte importante de verre lors de chaque démarrage et/ou ajustement du dépôt CVD.
- Une inhomogénéité du revêtement, autant en composition qu'en épaisseur.
- Des risques accrus, du fait de l'inflammabilité des gaz utilisés et leur toxicité.

En outre, par exemple dans le cas spécifique de l'utilisation de ces articles comme porte de four, s'ajoute les problèmes des rayures, des empreintes, de la résistance chimique et d'une possible décoloration du revêtement.

Pour toutes ces raisons, il est actuellement recherché d'autres revêtements présentant les mêmes propriétés de réflexion mais qui puissent être déposés par des techniques ne présentant pas les inconvénients précités.

De telles techniques de dépôt sont notamment les techniques de dépôt par pulvérisation sous vide, souvent assisté par magnétron. Ces techniques sont notamment utilisées lorsque le revêtement est constitué d'un empilement complexe de couches successives dont les épaisseurs ne dépassent pas quelques nanomètres ou quelques dizaines de nanomètres.

Par exemple, on peut citer les demandes US2014/0071524 A1, US2014/0098415 A1 et EP1238950 A2 qui décrivent un empilement de couche mince permettant la réflexion du rayonnement infrarouge grâce à l'utilisation d'un empilement dont la couche fonctionnelle est une couche en argent, entourée de couches de $SiN_x$ pour limiter le flou. La présente invention porte sur des articles verriers dont les empilements ne comprennent pas de couches en argent ou autres métaux précieux tel que l'or ou encore en cuivre ou tout autre métal conducteur utilisé pour réfléchir l'infrarouge.

Le but de la présente invention est ainsi de fournir un article verrier, en particulier un vitrage, qui présente une très forte réflexion dans le domaine du visible (380-780nm), qui présente une coloration en transmission adaptée, en particulier une coloration bronze ou dorée, et qui est suffisamment résistant thermiquement, mécaniquement et chimiquement à l'application envisagée, en particulier à une utilisation comme porte de four.

Plus particulièrement, la présente invention se rapporte à un article verrier comprenant au moins un substrat verrier sur lequel est déposé un empilement de couches, ledit empilement comprenant au moins une couche constituée par une couche de nitrure de silicium de formulation $SiN_x$, dans lequel x est inférieur à 1,25, l'épaisseur physique de ladite couche de $SiN_x$ étant comprise entre 5 et 50 nm, et dans lequel la réflexion lumineuse dans le domaine du visible de l'article verrier, mesurée du côté où est déposé l'empilement ou de la couche, est supérieure à 20%.

Notamment, selon la présente invention, l'adaptation de l'épaisseur de la couche de nitrure de silicium de formulation $SiN_x$ à la valeur de la valeur x, au sein des gammes de valeurs décrites précédemment, permet d'obtenir une valeur de la réflexion lumineuse dans le domaine du visible supérieure à 20%.

Elle peut permettre en outre une couleur en transmission adaptée donnant au vitrage une coloration bronze ou dorée.

D'une manière générale, toutes les caractéristiques lumineuses et énergétiques présentées dans la présente description sont obtenues selon les principes et méthodes décrits dans la norme internationale ISO 9050 (2003), se rapportant à la détermination des caractéristiques lumineuses, solaires et énergétiques des vitrages utilisés dans le verre pour la construction.

Selon des modes de réalisations particuliers et avantageux de la présente invention, qui peuvent le cas échéant être combinés entre eux :

- La couche de nitrure de silicium présente une formulation SiN$_x$, dans lequel x est inférieur à 1,20, de préférence encore est inférieur à 1,15, de préférence encore est inférieur à 1,10, ou même est inférieur à 1,00. De manière très préférée, x est inférieur à 0,90, voire même inférieur à 0,80 ou encore est inférieur à 0,70. Dans le cas le plus préféré, x est inférieur à 0,6 voire même est inférieur à 0,5. La valeur x selon l'invention correspond à la valeur moyenne de x mesurée dans toute l'épaisseur de ladite couche SiN$_x$.
- La couche de SiN$_x$ présente une épaisseur comprise entre 6 et 40 nm, notamment entre 7 et 25 nm, en particulier entre 10 et 20 nm.
- La réflexion lumineuse dans le domaine du visible de l'article verrier, coté empilement, est supérieure à 30%, de préférence supérieure à 35%, de préférence encore supérieure à 40% ou même supérieure à 45%.
- L'empilement est constitué essentiellement de ladite couche de SiN$_x$ et de couches de matériaux diélectriques. Par matériau diélectrique, on entend tout matériau dont la résistivité est initialement supérieure à 10$^{10}$ ohms-mètres ($\Omega$.m). De tels matériaux peuvent cependant être dopés pour en améliorer la conductivité électrique pour en augmenter leur rendement de pulvérisation cathodique. Par exemple, des couches de Si$_3$N$_4$ utilisés dans l'empilement selon l'invention peuvent comprendre de l'aluminium.
- L'empilement est constitué de ladite couche de SiN$_x$ et d'au moins une surcouche en un matériau diélectrique de préférence encore choisi parmi les oxydes, les nitrures et les oxynitrures.
- L'empilement comprend la succession des couches suivantes, à partir de la surface du substrat verrier :

  - optionnellement une ou plusieurs sous-couches en matériau diélectrique d'épaisseur physique, au total, comprise entre 5 et 50 nm,
  - ladite couche de nitrure de silicium de formulation SiNx,
  - une ou plusieurs surcouches en matériau diélectrique, la ou lesdites couches étant d'épaisseur physique, au total, comprise entre 5 et 50 nm.

Selon un mode particulier préféré, toutes les couches précédemment décrites forme une succession sans couches intermédiaires entre elles. Selon un mode particulier, l'empilement est constitué de la succession de couches précédemment décrite.

- La ou les couches de matériau diélectrique sont choisies parmi le nitrure de Silicium éventuellement dopé par Al, Zr, B, un nitrure d'aluminium, l'oxyde d'étain, un oxyde mixte de zinc et d'étain, un oxyde de silicium, un oxyde de titane, les oxynitrures de silicium SiO$_x$N$_y$.
- L'empilement comprend la succession des couches suivantes, à partir de la surface du substrat verrier :

  - éventuellement une sous-couche en un matériau diélectrique,
  - ladite couche de nitrure de silicium de formulation SiNx,
  - une surcouche supérieure d'épaisseur comprise entre 5 et 30 nm de nitrure de Silicium comprenant éventuellement Al, Zr, B. Optionnellement, l'empilement comprend en outre une surcouche d'oxyde de titane Selon un mode particulier préféré, toutes les couches précédemment décrites forme une succession sans couches intermédiaires entre elles. Selon un mode particulier, l'empilement est constitué de la succession de couches précédemment décrite.

- L'empilement ne comprend en principe pas de couches métalliques à propriétés de réflexion dans l'infrarouge.
- En particulier, l'empilement selon l'invention ne comprend de couches à base d'argent, d'or ou de cuivre, en particulier ne comprend de couches à base d'argent.
- Selon un mode particulier de réalisation de la présente invention, la concentration Si/N n'est pas constante dans l'épaisseur de la couche SiNx mais varie d'une extrémité à une autre de la couche, depuis une plus faible concentration d'azote vers une plus forte concentration d'azote.

L'article verrier selon l'invention peut être monté ou mis en œuvre selon toute forme connue, par exemple en vitrage simple, en vitrage multiple, par exemple double ou encore en vitrage laminé. Par vitrage laminé on entend classiquement un vitrage comprenant au moins deux substrats verriers unis par un feuillet plastique par exemple du type PVB ou PU.

L'empilement de couches comprenant la couche de nitrure de silicium SiN$_x$ avec x inférieur à 1,25 selon l'invention, peut être déposé dans l'article verrier sur toute face de celui-ci.

Selon un premier exemple, lorsque l'empilement est déposé sur un vitrage simple élément d'une porte de four, celui-ci peut être avantageusement positionné en face 1 du vitrage, c'est-à-dire sur la face du vitrage tournée vers l'intérieur de la cavité du four.

Selon un autre exemple, lorsque l'empilement est déposé sur un vitrage double constitutif d'une porte de four, celui-ci peut être avantageusement positionné en face 2 ou 3 du vitrage, de préférence en face 2 du vitrage, les faces du vitrage étant numérotées depuis l'intérieur (la cavité) du four vers l'extérieur dudit four. Dans une telle configuration, l'empilement est ainsi disposé entre les deux substrats verriers du vitrage double et est ainsi protégé.

Le substrat verrier peut être directement utilisé sans traitement supplémentaire ou alternativement être utilisé après avoir subi un traitement thermique qui peut être une trempe, un bombage ou un bombage/trempe ou recuit. Une telle trempe consiste par exemple en un traitement thermique pendant 5 à 10 minutes à une température comprise entre 600 et 750°C.

Selon une première application l'article verrier trouve son utilisation comme porte de four (conventionnel ou micro-ondes) ou encore comme article de protection d'un four. L'article peut aussi être utilisé pour d'autres applications électroménagères comme couverture de gazinières, porte de caves à vin, porte de réfrigérateurs, protection de poêle, etc.

L'article verrier peut également être utilisé comme vitrage de bâtiment ou encore comme vitrage automobile.

L'article verrier selon l'invention comprend un empilement capable de subir un traitement thermique tel qu'une trempe, un bombage ou plus généralement un traitement thermique à des températures supérieures sans perte de ses propriétés optiques.

Un vitrage selon l'invention permet également de réfléchir une partie substantielle du rayonnement lumineux le traversant, c'est-à-dire dont la longueur d'onde est comprise entre environ 380 et 780 nm, créant ainsi une effet miroir recherché dans certaines application comme les portes de four ou certains vitrages pour bâtiments, notamment dans les pays à fort ensoleillement.

En outre, les produits verriers selon l'invention sont résistants à l'humidité, à la rayure et aux attaques acides.

En particulier, les vitrages selon l'invention présentent une longévité améliorée, dans le sens où leurs propriétés initiales, notamment leur variation de coloration et leurs propriétés optiques, ne varient que très faiblement sous les agressions chimiques auxquelles ils sont soumis au cours de leur utilisation prévue.

Ils peuvent ainsi être avantageusement utilisés en temps que vitrage simple (un seul substrat verrier).

Un procédé de fabrication d'un article verrier selon l'invention comprend par exemple les étapes suivantes :

- fabrication d'un substrat verrier,
- dépôt sur le substrat verrier d'un empilement de couches par une technique de pulvérisation cathodique sous vide de préférence assistée par magnétron, dont une couche de nitrure de silicium $SiN_x$ selon l'invention, ladite couche étant obtenue par pulvérisation d'une cible comprenant ou constitué essentiellement par du silicium dans une atmosphère comprenant de l'azote et d'un gaz parfait.

Selon l'invention, on contrôle le taux d'azote présent dans la couche $SiN_x$ en limitant de pourcentage du gaz azote introduit dans la chambre de pulvérisation dans le mélange $N_2$/gaz parfait servant de gaz plasmagène. Il est en particulier entendu au sens de la présente invention que les couches de $SiN_x$ selon l'invention peuvent comprendre une partie minime d'un autre élément, en particulier l'aluminium, utile lors du procédé de dépôt sous vide à la pulvérisation de la couche de silicium formant la cible cathodique dans l'installation. A titre d'exemple, on utilise classiquement à l'heure actuelle des cibles de silicium comprenant 8% massique d'aluminium, pour en améliorer la conductivité.

Les exemples qui suivent sont donnés à titre purement illustratifs et ne limitent sous aucun des aspects décrits la portée de la présente invention. A des fins de comparaison, tous les empilements des exemples qui suivent sont synthétisés sur le même substrat verrier Planiclear®. Toutes les couches des empilements ont été déposées selon les techniques classiques bien connues de dépôts sous vide par pulvérisation magnétron.

Exemples :

Dans ces exemples on dépose, selon les techniques magnétrons classiques, sur un substrat en verre du type Planiclear® commercialisé par la société déposante, différentes épaisseurs d'une couche $SiN_x$ de composition variable: Les couches de nitrures sont obtenues selon les techniques de l'art dans le bâti magnétron.

Plus précisément, les différentes couches en $SiN_x$ ont été obtenues dans le même dispositif magnétron par pulvérisation à partir de cibles en silicium comprenant 8% massique d'aluminium dans deux compartiments successifs du dispositif de dépôt du revêtement $SiN_x$.

La pulvérisation de la cible de silicium est effectuée dans différentes atmosphères différant par la proportion relative d'azote et de gaz neutre (argon) dans le mélange permettant la formation des couches de nitrure de silicium.

On fait également varier l'épaisseur de la couche de la couche $SiN_x$ selon les techniques consacrées notamment en modulant la vitesse de défilement du substrat verrier dans le compartiment et/ou en modifiant la puissance appliquée sur la cathode.

Différents échantillons ont été préparés en faisant varier la composition et l'épaisseur de la couche de nitrure de silicium $SiN_x$ comme indiqué précédemment. Le tableau 1 rassemble l'ensemble des données recueillies. Les exemples 3 à 5 ont été soumis à un traitement supplémentaire de trempe après un chauffage à 680°C pendant 6 minutes.

Tableau 1

| Exemple | Vitesse de la ligne [m/min] | Puissance appliquée sur la cathode [kW] | %N₂ dans le mélange N₂/Ar |
|---|---|---|---|
| 1 | 3 | 50 | 5 |
| 2 | 4 | 50 | 5 |
| 3* | 2,8 | 35 | 3 |
| 4* | 3,5 | 40 | 5 |
| 5* | 3,5 | 40 | 5 |
| 6* | 3,5 | 40 | 35 |
| 7** | 3 | 55 | 45 |
| 8** | 4 | 55 | 45 |
| 9** | 3 | 60 | 50 |
| 10** | 4 | 60 | 55 |
| *après trempe **hors invention | | | |

Les caractéristiques lumineuses et énergétiques présentées dans la présente description sont obtenues selon les principes et méthodes décrits dans la norme internationale ISO 9050 (2003) et la norme EN 410 (2011).

Les caractéristiques colorimétriques sont mesurées sur un spectromètre et sont reportées ci-après, selon le système colorimétrique international L*, a*, b*.

Les mesures sont effectuées à partir d'un spectromètre Minolta Iso 1175.

Plus précisément :

$T_L$ est la transmission lumineuse.

$b^*_T$ est le paramètre b* mesurée en transmission,

$b^*_{(Rc)}$ est le paramètre b* mesurée en réflexion coté couches (c'est-à-dire de la face du vitrage sur laquelle est déposée l'empilement)

Rc est la réflexion de la lumière visible coté couches (illuminant D65, incidence quasi-normale).

L'épaisseur des couches de $SiN_x$ a été déterminée par des analyses de la tranche du vitrage par microscopie électronique par des analyses du vitrage par des techniques de spectrométrie de masse à ionisation secondaire (Time of Flight Secondary Ions Mass Spectroscopy (ToF-SIMS)).

Tableau 2

| Exemple | TL (%) | b*T | Rc(%) | b*(Rc) | Epaisseur de la couche SiNx (nm) | Rapport molaire N/Si dans la couche |
|---|---|---|---|---|---|---|
| 1 | 25,6 | 15,5 | 48,6 | -2,2 | 20 | 0,4 |
| 2 | 33,5 | 16,0 | 40,1 | -4,5 | 13 | 0,4 |
| 3* | 28,3 | 16,0 | 45,2 | -3,5 | 15 | 0,5 |
| 4* | 27,2 | 16,3 | 47,0 | -3,3 | 15 | 0,5 |
| 5* | 22,6 | 16,3 | 52,5 | -2,0 | 20 | 0,5 |
| 6* | 61 | 2,5 | 33,1 | 13 | 20 | 1,13 |
| 7** | 69,3 | 11,0 | 22,1 | -8,8 | 10 | 1,33 |
| 8** | 76,5 | 8,5 | 16,5 | -8,6 | 15 | 1,33 |

(suite)

| Exemple | TL (%) | b*T | Rc(%) | b*(Rc) | Epaisseur de la couche SiNx (nm) | Rapport molaire N/Si dans la couche |
|---|---|---|---|---|---|---|
| 9** | 87,4 | 1,3 | 10,7 | -4,4 | 15 | 1,33 |
| 10** | 85,5 | 2,0 | 12,6 | -6,0 | 20 | 1,33 |
| *après trempe **hors invention | | | | | | |

La composition des couches a été déterminée par les techniques classiques d'analyse XPS couplées à des moyens d'abrasion des couches.

Plus précisément l'appareil utilisé est un dispositif XPS NOVA de la société KRATOS, l'analyse étant effectuée dans les conditions suivantes :

Source : Al K$\alpha$ monochromatisée
300 Watts pour les spectres particuliers
Aire analysée : 110x110 $\mu$m$^2$ (mode $\mu$spot)
Angle de détection : normal ($\alpha$ = 0°)
Profondeur analysée inférieure à 10 nm en détection normale

Les conditions d'abrasion sont les suivantes :

Ions : Ar - 2.0 keV
Balayage : 3 x 3 mm$^2$ centré sur la zone d'analyse
Vitesse d'abrasion estimée sur Ta$_2$O$_5$ : 3.4 nm/min
Cycles d'abrasion/temps par cycle : 30 cycles de 1 minute

Le rapport atomique N/Si moyen de la couche de SiN$_x$ déposée immédiatement au-dessus du verre est proche de 0,4-0,5 pour la couche de SiN$_x$ des exemples 1 à 5.

Le rapport atomique N/Si de la couche de nitrure d'azote des exemples 7 à 10 (hors invention) est de l'ordre de 1,33 et est en bon accord avec une couche de la formulation générale classique Si$_3$N$_4$.

On observe également dans la première couche SiN$_x$ une concentration non linaire de l'azote et du silicium au sein de la couche de SiN$_x$, avec en particulier une croissance de la concentration en azote depuis la surface du substrat et à contrario une décroissance de la concentration en silicium depuis la surface du substrat.

Pour vérifier les résistances chimiques des couches fonctionnelles déposées selon les exemples précédents, on a mesuré, la résistance aux acides des vitrages précédemment décrits par le test SO$_2$ selon les conditions décrites dans la norme EN1096-2 (01/2001), annexe C.

Dans le système colorimétrique L*, a*, b* et sous incidence normale, la variation de couleur du vitrage en transmission, à l'issue du traitement acide (25 cycles), a été quantifiée en utilisant la grandeur ∆E classiquement utilisée dans le système international L*, a*, b* et définie par la relation:

$$\Delta E = \sqrt{(\Delta a^*)^2 + (\Delta b^*)^2 + (\Delta L^*)^2}$$

Les mesures sont effectuées à partir d'un spectromètre Minolta iso 1175.

On a également procédé aux tests BSN et HH décrit dans cette même norme.

Pour tous ces tests, on a mesuré des variations de la TL ($\Delta T_L$) et de la grandeur ∆E inférieur à 1%.

Les propriétés de résistance mécanique des vitrages munis des empilements ont également été mesurées sur l'échantillon de l'exemple 1 précédent.

Le test pratiqué est un test EST.

L'Erichsen Scratch Test EST, ou scratch testeur de dureté 413, mesure la résistance aux rayures d'une couche mince. Il est décrit dans la norme EN 438-2 (ISO 4586-2) . L'échantillon tourne avec une vitesse de rotation de 5 tours/min. Le poids peut être ajusté pour que la force appliquée sur la couche soit entre 0,1 et 10 N avec une pointe à Van Laar de diamètre 0,5mm.

Les résultats du test montrent une très légère rayure de vitrage, difficilement perceptible à l'œil, à une pression de 10 Newtons pour l'échantillon selon l'exemple 1.

Exemple comparatif:

A des fins de comparaison, on a mesuré dans les mêmes conditions que précédemment les paramètres optiques et énergétiques d'un vitrage Reflectasol™ commercialisé par la société Saint-Gobain Glass France et dont la couche active est une couche d'oxycarbure de silicium déposée par pyrolyse et un vitrage selon l'invention comprenant un substrat en verre du type Planiclear® commercialisé par la société déposante, différents empilements constitués par la séquence de couches suivantes:

| Verre | $/SiN_{x*}$ | $/Si_3N_4$ | $/TiO_x$ |
|---|---|---|---|
| | (15 nm) | (15nm) | (5nm) |

*x=0,4

Dans le tableau 3 qui suit, on a reporté les différentes caractéristiques permettant la comparaison directe entre le vitrage selon l'invention et le vitrage comparatif.

Tableau 3

| | Reflectasol | Invention |
|---|---|---|
| $T_L$ % | 31,0 | 31,0 |
| a* (T) | 3,5 | 4,2 |
| b* (T) | 17,0 | 16,5 |
| Rc (%) | 54,5 | 52,5 |
| a* (Rc) | -2,5 | -2,5 |
| b* (Rc) | 2,0 | 3,0 |

On retrouve des propriétés optiques et de transmission/réflexion lumineuse très similaires à celles du produit Reflectasol.

Les résultats reportés précédemment montre qu'un article verrier réfléchissant suffisamment la lumière pour l'obtention d'un effet miroir et de couleur en transmission bronze ou dorée, résistant mécaniquement et chimiquement, peut être obtenu grâce au dépôt à la surface de celui-ci d'un empilement comprenant au moins une couche de nitrure de silicium $SiN_x$ selon l'invention, dans lequel x est inférieur à 1,25, de préférence inférieur à 1,20 ou même x est inférieur à 1,00.

**Revendications**

1. Article verrier comprenant au moins un substrat verrier sur lequel est déposé un empilement de couches, ledit empilement comprenant au moins une couche constituée par une couche de nitrure de silicium de formulation $SiN_x$, dans lequel x est inférieur à 1,25, l'épaisseur physique de ladite couche de $SiN_x$ étant comprise entre 5 et 50 nm, et dans lequel la réflexion lumineuse de l'article verrier, mesurée du côté du substrat sur lequel est déposé l'empilement, est supérieure à 20%, et dans lequel l'empilement ne comprend de couche à base d'argent, d'or ou de cuivre.

2. Article verrier selon la revendication précédente, dans lequel x est inférieur à 1,00.

3. Article verrier selon la revendication précédente, dans lequel la réflexion lumineuse de l'article verrier, mesurée coté couche, est supérieure à 40%.

4. Article verrier selon l'une des revendications précédentes, dans lequel l'empilement est constitué essentiellement de ladite couche de $SiN_x$ et de couches de matériaux diélectriques

5. Article verrier selon l'une des revendications précédentes, dans lequel l'empilement est constitué de ladite couche et d'au moins une surcouche en un matériau diélectrique de préférence choisi parmi les oxydes, les nitrures et les oxynitrures.

**6.** Article verrier selon l'une des revendications précédentes, dans lequel l'empilement comprend la succession des couches suivantes, à partir de la surface du substrat verrier:

- optionnellement une ou plusieurs sous-couches en matériau diélectrique d'épaisseur physique, au total, comprise entre 5 et 50 nm,
- ladite couche de nitrure de silicium de formulation $SiN_x$,
- une ou plusieurs surcouches en matériau diélectrique, la ou lesdites couches étant d'épaisseur physique, au total, comprise entre 5 et 50 nm.

**7.** Article verrier selon l'une des revendications 4 à 6, dans lequel la ou les couches de matériau diélectrique sont choisies parmi le nitrure de Silicium éventuellement dopé par Al, Zr, B, un nitrure d'aluminium, l'oxyde d'étain, un oxyde mixte de zinc et d'étain, un oxyde de silicium, un oxyde de titane, les oxynitrures de silicium $SiO_xN_y$.

**8.** Article verrier selon l'une des revendications précédentes dans lequel l'empilement comprend la succession des couches suivantes, à partir de la surface du substrat verrier :

- éventuellement une sous-couche en un matériau diélectrique,
- ladite couche de nitrure de silicium de formulation $SiN_x$,
- une surcouche supérieure d'épaisseur comprise entre 5 et 30 nm de nitrure de Silicium éventuellement dopé par Al, Zr, B.

**9.** Article verrier selon la revendication précédente comprenant en outre une surcouche d'oxyde de titane.

**10.** Article verrier selon l'une des revendications précédentes, dans lequel l'empilement ne comprend de couches métalliques à propriétés de réflexion dans l'infrarouge.

**11.** Article verrier selon l'une des revendications précédentes, dans lequel la concentration Si/N varie dans l'épaisseur de la couche $SiN_x$.

**12.** Porte de four ou article de protection d'un four comprenant un article verrier selon l'une des revendications précédentes.

**13.** Utilisation d'un article verrier selon l'une des revendications 1 à 11 comme vitrage de bâtiment.

**14.** Utilisation d'un article verrier selon l'une des revendications 1 à 11 comme vitrage automobile.

**Patentansprüche**

**1.** Glasartikel, umfassend mindestens ein Glassubstrat, auf dem eine Stapelung von Schichten abgeschieden ist, wobei die Stapelung mindestens eine Schicht umfasst, die aus einer Siliciumnitridschicht der Formulierung $SiN_x$ besteht, wobei x kleiner als 1,25 ist, wobei die physikalische Dicke der $SiN_x$-Schicht im Bereich zwischen 5 und 50 nm liegt, und wobei die Lichtreflexion des Glasartikels, gemessen von der Seite des Substrats, auf der die Stapelung abgeschieden ist, größer als 20 % ist, und wobei die Stapelung keine Schicht auf Basis von Silber, Gold oder Kupfer umfasst.

**2.** Glasartikel nach dem vorstehenden Anspruch, wobei x kleiner als 1,00 ist.

**3.** Glasartikel nach dem vorstehenden Anspruch, wobei die Lichtreflexion des Glasartikels, gemessen Schichtseite, größer als 40 % ist.

**4.** Glasartikel nach einem der vorstehenden Ansprüche, wobei die Stapelung im Wesentlichen aus der $SiN_x$-Schicht und aus Schichten aus dielektrischen Materialien besteht

**5.** Glasartikel nach einem der vorstehenden Ansprüche, wobei die Stapelung aus der Schicht und mindestens einer Deckschicht aus einem dielektrischen Material besteht, vorzugsweise ausgewählt aus Oxiden, Nitriden und Oxynitriden.

**6.** Glasartikel nach einem der vorstehenden Ansprüche, wobei die Stapelung die Abfolge folgender Schichten, ausgehend von der Oberfläche des Glassubstrats, umfasst:

- optional eine oder mehrere Unterschichten aus dielektrischem Material von physikalischer Gesamtdicke im Bereich zwischen 5 und 50 nm,
- die Siliciumnitridschicht der Formulierung $SiN_x$,
- eine oder mehrere Deckschichten aus dielektrischem Material, wobei die Schicht oder Schichten von physikalischer Gesamtdicke im Bereich zwischen 5 und 50 nm sind.

**7.** Glasartikel nach einem der Ansprüche 4 bis 6, wobei die Schicht oder Schichten aus dielektrischem Material ausgewählt sind aus Siliciumnitrid, das gegebenenfalls mit Al, Zr, B dotiert ist, einem Aluminiumnitrid, Zinnoxid, einem Mischoxid aus Zink und Zinn, einem Siliciumoxid, einem Titanoxid, Siliciumoxynitriden $SiO_xN_y$.

**8.** Glasartikel nach einem der vorstehenden Ansprüche, wobei die Stapelung die Abfolge folgender Schichten, ausgehend von der Oberfläche des Glassubstrats, umfasst:

- gegebenenfalls eine Unterschicht aus einem dielektrischen Material,
- die Siliciumnitridschicht der Formulierung $SiN_x$,
- eine obere Deckschicht einer Dicke im Bereich zwischen 5 und 30 nm aus Siliciumnitrid, gegebenenfalls dotiert mit Al, Zr, B.

**9.** Glasartikel nach dem vorstehenden Anspruch, ferner umfassend eine Deckschicht aus Titanoxid.

**10.** Glasartikel nach einem der vorstehenden Ansprüche, wobei die Stapelung keine metallischen Schichten mit im Infrarot reflektierenden Eigenschaften umfasst.

**11.** Glasartikel nach einem der vorstehenden Ansprüche, wobei die Si/N-Konzentration in der Dicke der $SiN_x$-Schicht variiert.

**12.** Ofentür oder Artikel zum Schutz eines Ofens, umfassend einen Glasartikel nach einem der vorstehenden Ansprüche.

**13.** Verwendung eines Glasartikels nach einem der Ansprüche 1 bis 11 als Gebäudeverglasung.

**14.** Verwendung eines Glasartikels nach einem der Ansprüche 1 bis 11 als Automobilverglasung.

**Claims**

**1.** A glass article comprising at least one glass substrate on which a stack of layers is deposited, said stack comprising at least one layer consisting of a layer of silicon nitride of formulation $SiN_x$, in which x is less than 1.25, the physical thickness of said $SiN_x$ layer being between 5 and 50 nm, and in which the light reflection of the glass article, measured on the side of the substrate on which the stack is deposited, is greater than 20% and in which the stack does not comprise layers based on silver, on gold or on copper.

**2.** The glass article as claimed in the preceding claim, in which x is less than 1.00.

**3.** The glass article as claimed in the preceding claim, in which the light reflection of the glass article, measured on the stack side, is greater than 40%.

**4.** The glass article as claimed in one of the preceding claims, in which the stack is composed essentially of said $SiN_x$ layer and of layers of dielectric materials.

**5.** The glass article as claimed in one of the preceding claims, in which the stack is composed of said layer and of at least one overlayer made of a dielectric material, preferably chosen from oxides, nitrides and oxynitrides.

**6.** The glass article as claimed in one of the preceding claims, in which the stack comprises the sequence of the following layers, starting from the surface of the glass substrate:

- optionally, one or more underlayers made of dielectric material with a physical thickness, in total, of between 5 and 50 nm,
- said layer of silicon nitride of formulation $SiN_x$,
- one or more overlayers made of dielectric material, said layer(s) having a physical thickness, in total, of between 5 and 50 nm.

7. The glass article as claimed in one of claims 4 to 6, in which the layer(s) of dielectric material are chosen from silicon nitride optionally doped with Al, Zr, B, an aluminum nitride, tin oxide, a mixed zinc tin oxide, a silicon oxide, a titanium oxide, silicon oxynitrides $SiO_xN_y$.

8. The glass article as claimed in one of the preceding claims, in which the stack comprises the sequence of the following layers, starting from the surface of the glass substrate:

   - optionally an underlayer made of a dielectric material,
   - said layer of silicon nitride of formulation $SiN_x$,
   - an upper overlayer with a thickness of between 5 and 30 nm of silicon nitride optionally doped with Al, Zr, B.

9. The glass article as claimed in the preceding claim, additionally comprising a titanium oxide overlayer.

10. The glass article as claimed in one of the preceding claims, in which the stack does not comprise metal layers having properties of reflection in the infrared region.

11. The glass article as claimed in one of the preceding claims, in which the Si/N concentration varies in the thickness of the $SiN_x$ layer.

12. An oven door or article for protection of an oven, comprising a glass article as claimed in one of the preceding claims.

13. The use of a glass article as claimed in one of claims 1 to 11 as building glazing.

14. The use of a glass article as claimed in one of claims 1 to 11 as motor vehicle glazing.

**EP 3 609 850 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20140071524 A1
- US 20140098415 A1
- EP 1238950 A2